# EUROPÄISCHE PATENTANMELDUNG

(11) **EP 1 117 239 A2**
(43) Veröffentlichungstag der Anmeldung: **18.07.2001**
(21) Anmeldenummer: 00440332.5
(22) Anmeldetag: 15.12.2000
(51) Int. Cl.: H04M 3/533, H04Q 3/00

(54) **Versand von Sprachnachrichten im intelligenten Netz**

(30) Priorität: 13.01.2000 DE 10001103
(71) Anmelder: ALCATEL, 75008 Paris (FR)
(72) Erfinder: Brogné, Nicolas, 78530 Buc (FR); Sutter, Emmanuel, 53173 Bonn (DE); Kelles, Jean-Pierre, 4000 Liege (BE)
(74) Vertreter: Brose, Gerhard, Dipl.-Ing.

(57) **Zusammenfassung**

Die vorliegende Erfindung betrifft ein Verfahren zum Versenden von Sprachnachrichten eines Anrufers A an Adressaten B in einem Fernmeldenetz F, sowie ein System und einen Diensterechner S hierfür.

Das Fernmeldenetz besitzt intelligente Einrichtungen IN, die eine einfache Einbindung eines Diensterechners zum Behandeln der Sprachnachrichten ermöglichen.
Bei dem Verfahren wird der Anrufer nach Wahl einen bestimmten IN-Dienst mit dem Diensterechner verbunden wird und übermittelt diesem eine Sprachnachricht, die gewünschten Adressaten zu dieser Sprachnachricht und gegebenenfalls weitere Information zur Behandlung der Nachricht, z.B. ein Zeitfenster, in dem diese Nachricht versendet werden soll.
Die Sprachnachricht wird anschliessend automatisch an die Adressaten übermittelt. Die Übermittlung findet vorteilhaft innerhalb eines vom Anrufer angegebenen Zeitfensters statt.

## Beschreibung

Die Erfindung betrifft ein Verfahren zum Versenden von Sprachnachrichten in einem Fernmeldenetz, ein System zur Übermittlung von Sprachnachrichten und einen Diensterechner (Server) zum Speichern und Übermitteln von Sprachnachrichten nach den Oberbegriffen der unabhängigen Ansprüche.

Seit einigen Jahren werden die bestehenden Fernmeldenetze durch Elemente des sogenannten "Intelligenten Netzes" (IN) erweitert. Dadurch können den Teilnehmern verschiedene zusätzliche Dienste angeboten. Diese Dienste werden durch Anwahl von bestimmten Nummern aktiviert. Dabei werden grundsätzlich zunächst keine Teilnehmerendgeräte adressiert, sondern spezielle zur IN- Einrichtung gehörende Diensterechner. Die wesentlichen Voraussetzungen für das intelligente Netz stellen spezielle digitale Vermittlungsstellen dar (SSP = Service Switching Point), die durch zusätzliche Steuerungsprogramme in der Lage sind, IN- Rufe zu erkennen und die Anfragen an eine Kontrolleinheit (SCP = Service Control Point) weiterzuleiten. Von dort aus können weitere IN- Einheiten, z.B. Diensterechner, verallgemeinernd auch "Intelligent Peripherals" (=IP) genannt, aktiviert und Nutzverbindungen zu diesen geschaltet werden. Einen Überblick über Architektur, Schnittstellen und Funktionen solcher Diensterechner gibt das Buch "Intelligente Netze" von Gerd Sigmund (Hrsg), erschienen im Hüthig Verlag Heidelberg (ISBN: 3-7785-3908-6) auf den Seiten 121-128 unter der Überschrift "Intelligent Peripheral (IP)".

In klassischen Fernsprechnetzen ist ein Verteilen von einer Sprachnachricht an mehrere Adressaten nur dadurch möglich, dass man die Adressaten hintereinander anwählt jeweils die gleiche Sprachnachricht übermittelt. Bei einer größeren Anzahl von Adressaten wird dieses Verfahren sehr mühsam; insbesondere muss man stets damit rechnen, dass einzelne Adressaten entweder abwesend oder besetzt sind.
Zur Versendung von Fax-Nachrichten sehen moderne Faxgeräte eine Möglichkeit vor, Adressaten zu speichern, die dann nach Einlesen der Fax-Nachricht diese automatisch anzuwählen. Ein ähnliches Prinzip wäre auch für Sprachnachrichten denkbar; dieses Verfahren hätte jedoch den Nachteil dass zum einem ein spezielles Endgerät notwendig wäre und zum anderen die Telefonleitung für die gesamte Dauer der Übermittlung an alle Adressaten belegt wäre.
Ein moderner, mit dem Internet verbundener Dienst stellt die Möglichkeit zum Versenden von e-mails dar. Dabei können Nachrichten, in der Regel Schriftdokumente, von einem Absender an ausgewählte Adressaten versendet werden. Dieser Dienst ist sehr komfortabel und zuverlässig; er hat jedoch den Nachteil, dass nur Besitzer einer e-mail- Adresse erreicht werden können. Ausserdem sind Internet- Teilnehmer häufig nur sporadisch mit dem Internet verbunden. Ein e-mail- Adressat kann die für ihn bestimmten Nachrichten jedoch nur dann lesen, wenn er sich ins Internet anmeldet und seine "mail box" nach neuen Nachrichten durchschaut. Weiterhin sind IN- Dienste realisiert, bei dem Sprachnachrichten eines Nachrichtenanbieters auf einem Diensterechner gespeichert werden. Weitere Teilnehmer, die eine bestimmte IN- Rufnummer, werden dann mit diesem Rechner verbunden werden und können die Sprachnachricht abrufen. Die Schaltung von Anrufern zu diesen Rechnern kann beispielsweise abhängig von der Rufnummer eines Anrufers, der Zeit und dem Datum sein. Bei einem solchen Dienst kann jedoch eine Nachricht nur dann zum Adressaten gelangen, wenn dieser aktiv anruft.

Vorteile der Erfindung:
Der Erfindung liegt die Aufgabe zugrunde, ein komfortables und weitgehend automatisches Verfahren zum Versenden von Sprachnachrichten an ausgewählte Teilnehmer zu ermöglichen, ohne dass zusätzliche Endgeräte oder zusätzliche Einrichtungen an Endgeräten notwendig sind.

Erfindungsgemäß wird die Aufgabe durch ein Verfahren, sowie ein System und einen Diensterechner gemäß der Lehre der unabhängigen Ansprüche gelöst. Weitere vorteilhafte Ausgestaltungen der Erfindung sind den abhängigen Ansprüchen und der Beschreibung zu entnehmen.

Der Erfindung liegt der Gedanke zugrunde, das erfindungsgemäße Verfahren in die vorhandene IN- Architektur so zu integrieren, dass der damit angebotene Dienst den Fernsprechteilnehmern als weiterer IN- Dienst entweder vom Netzbetreiber oder anderen Diensteanbietern angeboten werden kann.

Im folgenden wird die Erfindung unter Zuhilfenahme der Zeichnungen weiter erläutert:
- Figur 1: zeigt schematisch die Kommunikationsbeziehungen in einem Fernmeldenetz mit daran angeschlossenen Teilnehmerendgeräten und einem erfindungsgemäßen Diensterechner.
- Figur 2: zeigt ein Ausführungsbeispiel für eine Funktionsaufteilung eines erfindungsgemäßen Diensterechners
- Figur 3: zeigt ein Ausführungsbeispiel für den ersten Teil eines Programmablaufs in einem erfindungsgemäßen Diensterechner
- Figur 4: zeigt ein Ausführungsbeispiel für den zweiten Teil eines Programmablaufs in einem erfindungsgemäßen Diensterechner

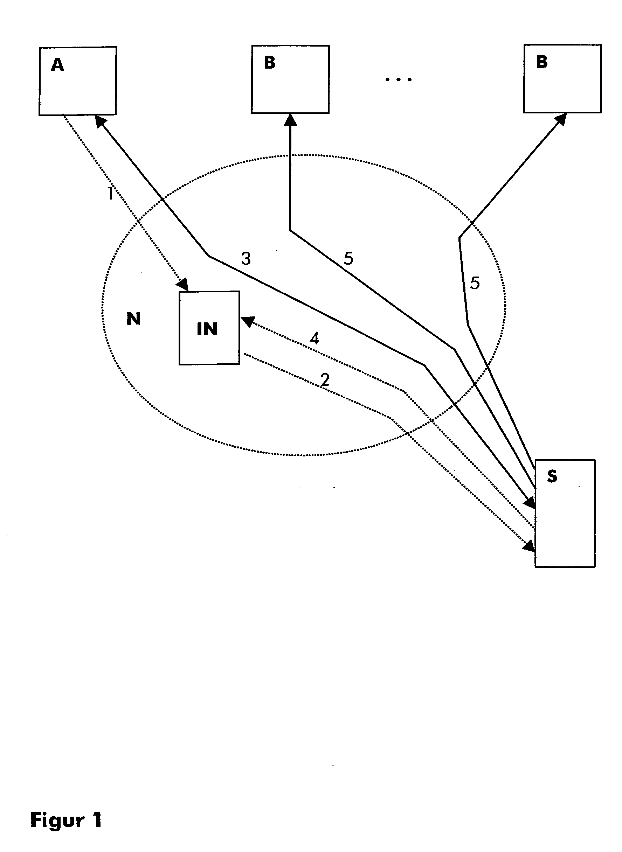

Figur 1 zeigt die Kommunikationsbeziehungen 1- 5 in einem System, bestehend aus einem Fernmeldenetz N mit intelligenter Netzeinrichtung IN, daran angeschlossenen Teilnehmerendgeräten A, B, wobei A den dienstanfordernden Teilnehmer und B die Adressaten des Dienstes darstellt, und einen ebenfalls an das Fernsprechnetz N angeschlossenen erfindungsgemäßen Diensterechner S. Die wesentlichen Kommunikationsbeziehungen zwischen den genannten Komponenten während des Ablaufs des erfindungsgemäßen Verfahrens sind durch die Linien 1-5 und die grundsätzliche Kommunikationsrichtung durch Pfeile dargestellt. Dabei stellen gestrichelte Linien die Signalisierungsinformation und durchgezogene Linien die Nutzkommunikation dar.

IN- Architekturen werden bei bestehenden Netzen unterschiedlich realisiert. So können die vorhin beschriebenen "Intelligent Peripherals", insbesondere der in Anspruch 11 beschriebene Diensterechner, mit einem SSP und/oder einem SCP integriert werden. Ausserdem kann der Diensterechner als einzelner Rechner (z.B. UNIX- Workstation) oder als Rechnerverbund bestehend aus mehreren Rechnern realisiert sein. Je nach Rechnerarchitektur, Anschaltung und Funktionsaufteilung ergeben sich dabei unterschiedliche Schnittstellen zwischen den einzelnen Komponenten. Für die vorliegende Erfindung ist die spezifische Aufteilung der IN-Funktionen nicht wesentlich. Ohne Beschränkung der Allgemeinheit wird daher für die folgenden Ausführungen davon ausgegangen, dass der Diensterechner als einzelner, eigener Rechner realisiert ist.

Ein Ausführungsbeispiel wird anhand dieser Figur erläutert. Das erfindungsgemäße Verfahren weist folgende Schritte auf:
- Ein Anrufer A adressiert durch Wahl einer bestimmen IN- Rufnummer 1 den erfindungsgemäßen IN- Dienst.
- Die IN- Einrichtung (z.B. bestehend aus SSP und SCP) detektiert den Anruf, startet den erfindungsgemäßen Dienst und informiert den Diensterechner S durch Übermittlung einer bestimmten Information 2.
- Die IN- Einrichtung veranlasst die Schaltung einer Nutzverbindung 3 zwischen dem Anrufer A und dem Diensterechner S.
- Der Diensterechner S fordert den Anrufer A durch eine Sprachausgabe zur Eingabe der Adressen, der Sprachnachricht und gegebenenfalls zur Angabe der gewünschten Sendezeit und des gewünschten Zeitfensters über diese Nutzverbindung 3 auf.
- Nach Abschluss der Informationsaufnahme wird die Nutzverbindung 3 vom Diensterechner S aufgelöst.
- Zur gewünschten Sendezeit veranlasst der Diensterechner durch Übermittlung der Rufnummern 4 die IN- Einrichtung zur Herstellung von Nutzverbindungen zu den gewünschten Adressaten. Sofern keine gewünschte Sendezeit eingegeben wurde, erfolgt diese Veranlassung unmittelbar nach Beenden der im letzten Verfahrensschritt genannten Informationsaufnahme.
- Nach Herstellen der Nutzverbindungen 5 durch die IN- Einrichtung wird die Sprachnachricht an die gewünschten Adressaten übermittelt.
- Bei Nicht- Erreichen eines oder mehrerer Adressaten kann die Veranlassung zur Verbindungsherstellung 4 wiederholt werden.

Anhand der folgenden Figuren wird beispielhaft ein erfindungsgemäßer Diensterechner mit einem beispielhaft darauf implementierten Funktionsablauf beschrieben.

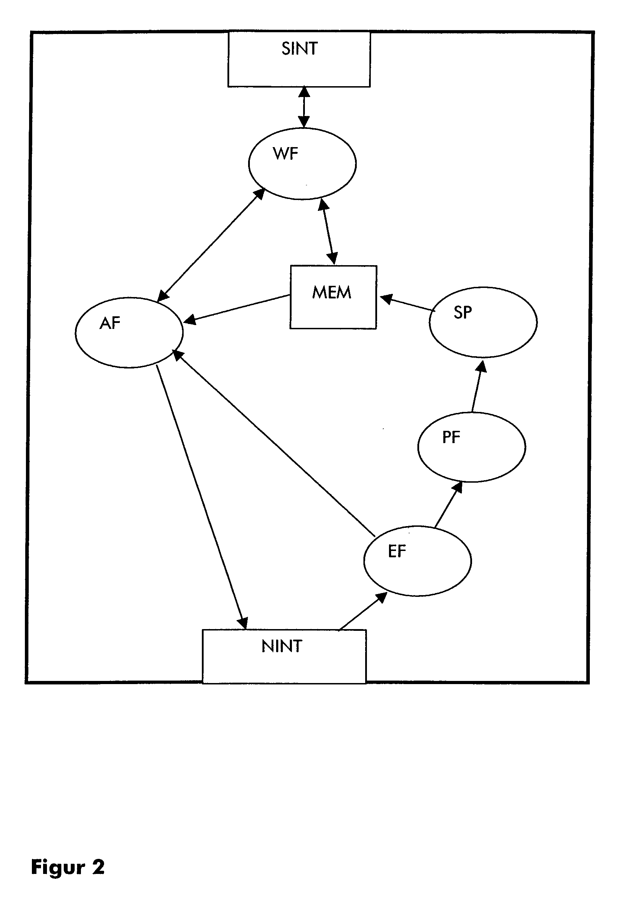

Figur 2 zeigt beispielhaft die schematische funktionale Aufteilung eines erfindungsgemäßen Diensterechners. Dabei werden nur wesentliche, für den erfindungsgemäßen Dienst erforderliche Kernfunktionen und deren Interaktionen beschrieben, d.h. es wird bewusst darauf verzichtet, z.B. Rechnerverwaltungsfunktionen (Betriebssystem) zu beschreiben.

In Figur 2 wird beispielhaft davon ausgegangen, dass der Diensterechner S eine Schnittstelle SINT zu einem Rechner (z.B. SCP) der Intelligenten Einrichtung IN besitzt und eine Schnittstelle NINT zum Fernmeldenetz N zur Schaltung von Nutzverbindungen zu einem oder mehreren Teilnehmern. Die Nutzschnittstelle NINT ist mit einer Spracherkennungsfunktion EF für einkommende Nachrichten und mit einer Sprachausgabefunktion AF für ausgehende Nachrichten verbunden. Mit der Spracherkennungsfunktion EF ist weiter eine Plausibilitätsfunktion PF zur Überprüfung des Nachrichteninhalts verbunden; mit dieser Funktion ist eine Speicherfunktion SF zur Speicherung der für plausibel befundenen Information in einen Speicher MEM. Der Speicher MEM ist darüber hinaus mit der Anwählfunktion WF verbunden, die auf die Adresseninformation (Rufnummern) zugreift und über die Verbindung mit der Signalisierungsschnittstelle SINT mit der IN- Einrichtung des Fernsprechnetzes verbunden ist. Der Speicher MEM, die Spracherkennungsfunktion EF und die Signalisierungsschnittstelle SINT sind mit der Ausgabefunktion AF verbunden, die auf die im Speicher MEM gespeicherten Nachricht zugreift und diese über die Verbindung mit der Nutzschnittstelle NINT an verbundene Teilnehmerendgeräte A, B sendet.

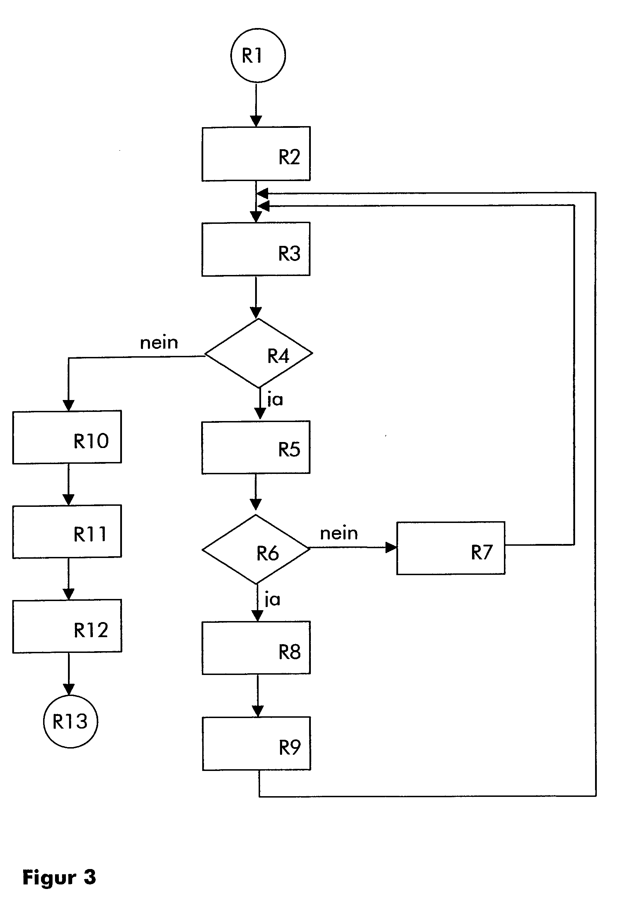

Der beispielhafte Ablauf der Funktionen des erfindungsgemäßen Diensterechners wird in zwei Stufen beschrieben. Figur 3 betrifft ein Ausführungsbeispiel des Funktionsablaufs zur Informationsaufnahme (1. Stufe) dar:
- R1: Der Ablaufstart zur Informationsaufnahme in Figur 3 erfolgt durch Signalisierung von der intelligenten Einrichtung IN des Fernsprechnetzes.
- R2: Der nun mit dem Diensterechner R verbundene Anrufer A wird durch die Ausgabefunktion AF aufgefordert, entweder eine Adresseneingabe oder die Endekennung, z.B. "Ende Adresseneingabe" zu übermitteln.
- R3: Die übermittelte Information wird von der Spracherkennungsfunktion EF analysiert.
- R4: Wird die übergebene Information von der Spracherkennungsfunktion EF als Endekennung erkannt, wird nach R10 zur Aufnahme der Sprachinformation verzweigt. Sonst wird die Information als Adresseninformation angesehen und damit nach R5 verzweigt.
- R5: Die Information wird, soweit möglich, von der Plausibilitätsfunktion PF auf Integrität und Eindeutigkeit geprüft. Dies ist insbesondere dann von Bedeutung, wenn nicht explizit Rufnummern, sondern vorher mit dem Diensteanbieter vereinbarte Kennungen (z.B. "Eltern" oder "Freunde") für eine oder mehrere Rufnummern übermittelt werden.
- R6: Bei bestandener Plausibilitätsprüfung durch die Plausibilitätsfunktion wird die Information als gültig angesehen und zur Speicherung nach R8 verzweigt. Bei nicht bestandener Plausibilitätsprüfung wird nach R7 verzweigt.
- R7: Der Anrufer wird über die Sprachausgabefunktion AF über die Ungültigkeit der Adresseninformation informiert und zu einer weiteren Eingabe aufgefordert.
- R8: Die gültige Rufnummer bzw. gültigen Rufnummern werden durch die Speicherfunktion SP im Speicher MEM abgelegt.
- R9: Der Anrufer wird über die Sprachausgabefunktion über die Gültigkeit der Adresseninformation informiert zu einer weiteren Eingabe aufgefordert.
- R10: Der Anrufer wird über die Ausgabefunktion aufgefordert, die Sprachnachricht zu übermitteln. Weiter wird er aufgefordert, das Ende der Sprachnachricht mit der Information mit der Endekennung, z.B. "Ende Sprachnachricht" zu markieren.
- R11: Die Sprachnachricht wird von der wird von der Speicherfunktion SP im Speicher MEM abgelegt.
- R12: Der Anrufer wird durch die Sprachausgabefunktion AF über das Ende der Aufnahmeprozedur mitgeteilt.
- R131: Die Auflösung der Nutzverbindung wird veranlasst.

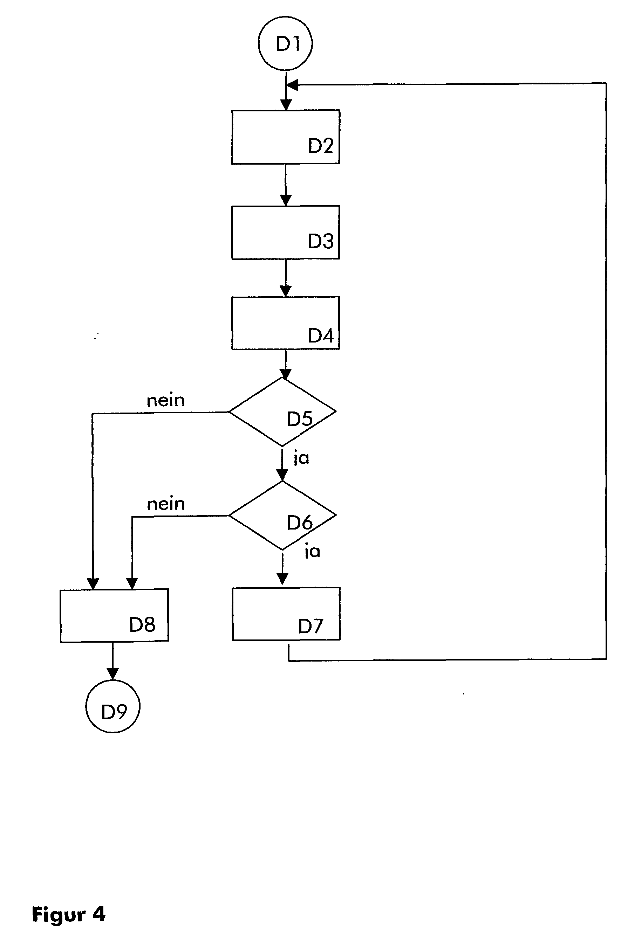

Figur 4 betrifft ein Ausführungsbeispiel des Funktionsablaufs zur Informationsweitergabe (2.Stufe):
- D1: Der Ablaufstart erfolgt, sobald die in Figur 3 beschriebene Ablauf beendet ist.
- D2: Die für eine Nachricht bestimmte Adressen werden von der Wählfunktion WF aus dem Speicher MEM ausgelesen und durch Weitergabe an die IN- Einrichtung Nutzverbindungen zu den Adressaten veranlasst.
- D3: Die Nachricht wird an alle Adressaten, zu denen Nutzverbindungen hergestellt werden konnten, durch die Ausgabefunktion AF weitergeleitet.
- D4: Die entsprechenden Adressen werden von der Wählfunktion WF aus dem Speicher MEM gelöscht.
- D5: Ist eine bestimmte, z.B. fest programmierte Zeit von Beginn des Ablaufs abgelaufen (time-out), so wird nach D8 verzweigt.
- D6: Konnte die Nachricht an alle Adressaten übermittelt werden, so wird nach D8 verzweigt.
- D7: Nach einer bestimmten, z.B. fest programmierten Wartezeit wird zur erneuten Verbindungsveranlassung zu noch nicht erreichten Adressaten nach D2 weitergeleitet.
- D8: Für den Anrufer wird eine Quittung erstellt, die er abrufen kann. Diese Quittung enthält Information über erreichte und nicht- erreichte Adressaten seiner Sprachnachricht.

Bei dem bisher beschriebenen Ausführungsbeispielen wurde davon ausgegangen, dass die gesamte zwischen dem Anrufer A, den Empfänger(n) B und dem Diensterechner ablaufende Kommunikation aus Sprachinformation besteht. Eine solche Realisierung ist besonders vorteilhaft, sie zum einen benutzerfreundlich ist und zum anderen weder Anrufer, noch Adressaten spezielle Endgeräte benötigen.

In einer alternativen erfindungsgemäßen Realisierung wird die Adressateneingabe durch Eingeben der entsprechenden Rufnummern über die Wähltasten des Anruferendgeräts erfolgen. Diese Information wird dann im Diensterechner durch eine Erkennungsfunktion zur Erkennung der vom Mehrfrequenzwahlverfahren (MFV) erzeugten Töne analysiert.

Eine weitere erfindungsgemäße Realisierung sieht die Eingabe der Information durch Internet- Kommunikation vor. Dabei sind der Anrufer A über einen PC und der Diensterechner S mit dem Internet verbunden. Der Anrufer A ruft die vom Dienstebetreiber bereitgestellte, vorzugsweise als Formular ausgebildete Webpage auf, füllt dieses mit der Adresseninformation, der Nachricht und gegebenenfalls mit weiteren Informationen aus und sendet die ausgefüllte Webpage zum Betreiber zurück. Diese Adresseninformation wird im Diensterechner S ausgewertet, auf Plausibilität geprüft und entsprechen dem vorher geschilderten Ausführungsbeispiel im Speicher MEM abgelegt. Die ebenfalls im Speicher MEM abgelegte Sprachnachricht wird durch eine Ausgabefunktion AF in Sprache konvertiert (text to speech) und über die Nutzschnittstelle NINT ausgesendet.
Alternativ dazu wird die Nachricht nicht durch Texteingabe, sondern durch Spracheingabe über das Mikrofon eines Multimedia PC an den Diensterechner S übermittelt.

Eine besonders vorteilhafte Realisierung betrifft die zusätzliche Angabe eines gewünschten Zeitfensters zum Versenden der Sprachnachricht. Damit wird es dem Anrufer ermöglicht, den Sendezeitpunkt (Beginn des Zeitfensters) für eine Nachricht zu bestimmen. Für eine bestimmte Dauer (Ende des Zeitfensters) wird dann, bei Nichterreichen eines Adressaten, in festgelegten, periodischen Abständen eine erneute Verbindungsaufnahme versucht. Die Eingabe des Zeitfensters erfolgt, analog der Adressateneingabe in dem beschriebenen Ausführungsbeispiel, sprachgeführt. Diese Information wird zusätzlich in den Speicher MEM abgelegt. Der Start des Ablaufs zur Nachrichtenverteilung in Figur 4 erfolgt erst bei Erreichen des Zeitfensters. Die in Figur 4 beschriebene in Schritt D5 beschriebene Zeit (time-out), innerhalb derer wiederholte Verbindungsversuche zu nicht erreichten Adressaten stattfinden, stellt für diese Realisierung die Länge des Zeitfensters dar.

## Patentansprüche

1. Verfahren zum Versenden von Sprachnachrichten zwischen Fernsprechteilnehmern, die über Endgeräte (A, B) an ein Fernmeldenetz (N) angeschlossen sind, welches insbesondere mit Einrichtungen für ein intelligentes Netz (IN) versehen ist, wobei ein Anrufer nach Anwahl eines bestimmten Dienstes mit einem Diensterechner (S) verbunden wird und diesem eine Sprachnachricht übermittelt **dadurch gekennzeichnet, dass** der Anrufer (A) die gewünschten Adressaten (B) zu dieser Sprachnachricht an den Diensterechner (S) übermittelt, wobei die Sprachnachricht automatisch an die Adressaten (B) vermittelt wird.

2. Verfahren nach Anspruch 1 **dadurch gekennzeichnet, dass** der Anrufer (A) den gewünschten Versendezeitpunkt der Sprachnachricht an den Diensterechner (S) übermittelt.

3. Verfahren nach Anspruch 1 **dadurch gekennzeichnet, dass** der Anrufer ein Zeitfenster übermittelt, in dem Vermittlungsversuche stattfinden sollen.

4. Verfahren nach Anspruch 1 **dadurch gekennzeichnet, dass** die Übermittlung der Adressaten durch Eingabe der Telefonnummer erfolgt.

5. Verfahren nach Anspruch 1 **dadurch gekennzeichnet, dass** die Übermittlung der Adressaten durch Eingabe von vorher mit dem Diensteanbieter vereinbarten Namen für je eine Telefonnummer erfolgt.

6. Verfahren nach Anspruch 1 **dadurch gekennzeichnet, dass** die Übermittlung der Adressaten durch Eingabe von vorher mit dem Diensteanbieter vereinbarten Kennungen für bestimmte Teilnehmerkreise erfolgt.

7. Verfahren nach Anspruch 1 **dadurch gekennzeichnet, dass** die Übermittlung der gewünschten Adressaten mittels der Texteingabe erfolgt.

8. Verfahren nach Anspruch 1 **dadurch gekennzeichnet, dass** die Übermittlung der Adressaten mittels Spracheingabe erfolgt und eine Spracherkennung im Diensterechner vorgenommen wird.

9. Verfahren nach Anspruch 1 **dadurch gekennzeichnet, dass** die Eingaben des Anrufers im Diensterechner auf Plausibilität und Eindeutigkeit überprüft werden, und dieser gegebenenfalls zu einer erneuten Eingabe aufgefordert wird.

10. System bestehend aus einem Fernmeldenetz, einem oder mehreren Diensterechnern und Endgeräten, wobei Sprachnachrichten des Anrufers im Diensterechner gespeichert sind **dadurch gekennzeichnet, dass** zusätzlich die Adressaten (Teilnehmerkreis) einer Sprachnachricht im Diensterechner gespeichert sind, wobei der Diensterechner diese Nachricht automatisch an die Adressaten vermittelt.

11. Diensterechner (S), insbesondere in Verbindung mit einer Intelligenten Netzeinrichtung (IN), der mit einem Fernmeldenetz (N) verbundenen ist, mit einer Funktion zur Speicherung von Sprachinformation (SP) in einem Speichermedium (MEM), einer Funktion zur Spracherkennung (EF) und einer Funktion zur Sprachausgabe (AF) **dadurch gekennzeichnet, dass** die vom Anrufer (A) übergebene Sprachinformation mindestens aus einer Sprachnachricht und der Adresseninformation besteht, die Ermittlung der Telefonnummern der Adressaten (B) durch Analyse der Adresseninformation durch die Spracherkennungsfunktion (EF) erfolgt, eine Anwählfunktion (WF) automatisch Verbindungen zu den Adressaten (B) veranlasst wird und die Sprachnachricht durch die Sprachausgabefunktion (AF) übermittelt wird.

12. Diensterechner nach Anspruch 11 **dadurch gekennzeichnet, dass** eine Funktion enthalten ist, die den vom Anrufer übermittelten Versendezeitpunkt speichert und die Anwählfunktion zu dem angegebenen Zeitpunkt aktiviert.

13. Diensterechner nach Anspruch 11 **dadurch gekennzeichnet, dass** eine Funktion die Anwählfunktion innerhalb des Zeitfensters wiederholt aktiviert, bis die Nachricht an den Adressaten B übermittelt ist.

14. Diensterechner nach Anspruch 11 **dadurch gekennzeichnet, dass** eine Funktion enthalten ist, die durch gesonderten Anruf eines Teilnehmers übermittelte Zuordnungen von Bezeichnungen (Namen oder Kennungen) mit einer oder mehreren Teilnehmernummern speichert und diese Information an die Anwählfunktion übergibt.

15. Diensterechner nach Anspruch 11 **dadurch gekennzeichnet, dass** eine Funktion enthalten ist, die die übermittelte Information auf Plausibilität und Eindeutigkeit (PF) überprüft, und den Anrufer gegebenenfalls über die Sprachausgabefunktion (AS) zur erneuten Informationseingabe auffordert.

16. Diensterechner nach Anspruch 11 **dadurch gekennzeichnet, dass** eine Internetanbindung vorhanden ist und die Informationsübermittlung zwischen dem Anrufer A und Diensterechner S über das Internet erfolgt.
